# EUROPEAN PATENT SPECIFICATION

(11) **EP 3 988 399 B1**
(45) Date of publication and mention of the grant of the patent: **29.07.2026**
(21) Application number: 20203930.1
(22) Date of filing: 26.10.2020
(51) Int. Cl.: B60R 21/13, B60R 21/015, B60R 21/02

(54) **ADJUSTABLE SAFETY CELL**
EINSTELLBARE SICHERHEITSZELLE
CELLULE DE SÉCURITÉ RÉGLABLE

(43) Date of publication of application: 27.04.2022
(73) Proprietor: Ningbo Geely Automobile Research & Development Co., Ltd., Ningbo, Zhejiang 315336 (CN); Zhejiang Geely Holding Group Co., Ltd., Hangzhou, Zhejiang 310051 (CN)
(72) Inventor: NILSSON, Magnus, 448 37 Floda (SE); GABRIELSSON, Angelika, 412 49 Göteborg (SE)
(74) Representative: Zacco Sweden AB

(56) References cited:
- DE-A1- 3 128 284
- FR-A1- 2 868 373

## Description

### FIELD OF THE INVENTION

The present invention relates to a vehicle comprising an adjustable safety cell.

### BACKGROUND OF THE INVENTION

Deformation zones and safety cells are commonplace features of vehicles that help mitigate the damage caused to occupants thereof should a collision occur. Having a large deformation zone is beneficial from a collision damage mitigation perspective, while having a large safety cell is beneficial from an occupant comfort perspective or maximum passenger count perspective. Thus, there is a trade-off between vehicle interior space and collision damage mitigation capabilities of vehicles. When designing the safety cell, the edge case of vehicle usage sets the minimum size thereof. Thus, when using the vehicle with fewer occupants than it is designed for, there is a wasted potential in deformation zone size.

The document FR2868373 discloses a vehicle comprising an adjustable safety cell according to the preamble of claim 1.

### SUMMARY OF THE INVENTION

It is an object of the present invention to alleviate at least some of the mentioned drawbacks of the prior art and to provide a vehicle user with a safe space in which to ride said vehicle in a wider variety of situations than static safety cells allow. This and other objects, which will become apparent in the following, are accomplished by a vehicle comprising an adjustable safety cell, as defined in the accompanying independent claim.

The term exemplary should in this application be understood as serving as an example, instance or illustration.

In order to increase a vehicle's collision damage mitigation capabilities, a vehicle is divided into a number of deformation zones and a safety cell. The deformation zones are the portions of the vehicle that are designed for controlled deformation should a collision occur, while the safety cell defines the portion of the vehicle that is designed for minimal deformation during a collision. By having as large a deformation zone as possible, the vehicle is given a longer distance (and consequently, time) to come to a complete stop should a collision occur. This decreases the deceleration forces an occupant of the vehicle is subjected to, thus increasing the safety therefore.

The invention is at least partially based on the realisation that controlling the size of the deformation zone based on detected vehicle occupancy would increase the safety for the occupants of the vehicle. By selectively disengaging the safety cell, thereby increasing the size of the deformation zone, for the seats of the vehicle that are unoccupied, increased safety for the actual occupants of the vehicle is achieved.

According to a first aspect of the present invention, an adjustable safety cell for adjusting the size of a deformation zone of a vehicle is provided. The adjustable safety cell comprises a vehicle reinforcement frame; and a movable reinforcement member arranged to reinforce at least a portion of said vehicle reinforcement frame; wherein said reinforcement member is arranged to move between a first position and a second position; wherein in said first position, a first portion of said vehicle reinforcement frame is reinforced, and wherein in said second position, a second portion of said vehicle reinforcement frame is reinforced.

The reinforced portion of said vehicle reinforcement frame defines a safety cell size of said vehicle. Thus, by selectively reinforcing different portions of the vehicle reinforcement frame, the safety cell size and shape may be controlled in order to provide a good fit with the needs of the occupants.

Movement of the reinforcement members reinforces different portions of the vehicle reinforcement frame so that the size of the deformation zone of the vehicle is adjustable. For example, in situations where the vehicle only holds occupants in the back seat, the front seat and luggage area may be made part of the deformation zone by moving the reinforcement members therefrom, thus reinforcing only the section of the vehicle interior that corresponds to the back seat thereof. Alternatively, in situations where the vehicle holds occupants in the front row, back seat and in a luggage area converted to hold additional seats, the entire vehicle interior may be made part of the safety cell, thus decreasing the size of the deformation zone to only include sections of the vehicle that do not hold occupants.

According to one example embodiment, said second position is adjacent to said first position. Similarly, said second portion is adjacent to said first portion. In at least one embodiment of the present invention, said reinforcement member is arranged to move between a plurality of positions; wherein in each position, a corresponding portion of said vehicle reinforcement frame is reinforced. For example, said reinforcement member may be arranged to move between three or more different positions, thus reinforcing three or more different portions of said vehicle reinforcement frame.

According to one example embodiment, movement of said movable reinforcement member between two positions does not require that the movable reinforcement member leaves the position from which it moves entirely. For example, a portion of said movable reinforcement member may move between a first position and a second position, while a portion of said movable reinforcement member remains in its initial position.

According to one example embodiment, said adjustable safety cell comprises a plurality of reinforcement members, each of which is movable between at least a respective first position and second position. This allows for more precise control of the safety cell size, shape and position.

According to the invention, said adjustable safety cell is arranged to move said reinforcement members based on detected vehicle occupancy.

By having the adjustable safety cell automatically confirm its configuration to the detected vehicle occupancy, increased occupant safety is achieved.

According to the invention, said adjustable safety cell further comprises a vehicle occupancy detection module configured to detect vehicle occupancy.

In the context of the present application, vehicle occupancy is taken to mean a measure of how many individuals are present in the vehicle, and/or which seats are occupied by said individuals. Additionally or alternatively, vehicle occupancy may also include a seat-by-seat classification of detected occupancy in said vehicle, e.g. differentiating between passengers, pets, cargo, etc.

Vehicle occupancy may be determined using one or more sensors, e.g. cameras or pressure sensors, configured to detect and/or classify occupancy for each seat or section of the vehicle. As such, said vehicle occupancy detection module may comprise any number of such sensors. Alternatively, said adjustable safety cell may be configured to use such sensors already provided in a vehicle for determining vehicle occupancy.

According to one example embodiment, said vehicle reinforcement frame defines a plurality of sections of a vehicle interior and wherein movement of said reinforcement members between a first position and a second position is such that different sections of said vehicle interior are reinforced.

Said vehicle reinforcement frame may for example be provided in the shape of a frame or a plurality of interconnected frames, i.e. in a grid-like structure. Alternatively, said safety cell frame may be provided in the shape of one or more members that intersect each other, e.g. two members intersecting each other at a right angle in the shape of a cross, or two members intersecting a third, thus forming a two-barred cross.

In such an embodiment, said adjustable safety cell comprises a plurality of reinforcement members, each of which is movable between at least a respective first position and second position. This allows for more precise control of the safety cell size, shape and position.

The vehicle reinforcement frame extends in at least a plane that is parallel or at least substantially parallel with the length-width extension of the vehicle. Additionally, the vehicle reinforcement frame may extend three-dimensionally. This allows a sectioned box-shape to be formed around at least a portion of said vehicle interior. For example, the vehicle reinforcement frame may define a three-dimensional grid of sections of a vehicle interior. Furthermore, movement of said reinforcement members between a first position and a second position may be such that different sections of said vehicle interior are reinforced. In one such embodiment, the adjustable safety cell may adjust the size of the deformation zone to exclude the upper portion of one side of a vehicle interior in which no occupants are detected. In case of an accident in which the vehicle rolls, having a partially deformable upper portion of one section of the vehicle interior may increase the likeliness of the vehicle roll coming to a stop.

According to one example embodiment, said vehicle reinforcement frame is made from at least one hollow structural member, at least partially inside of which said movable reinforcement member is arranged.

According to one example embodiment, the hollow structural member of said reinforcement frame is arranged to deform in a controlled manner. This is achieved by having predefined fail points at which the hollow structural member deforms first, given a predicted collision force is applied.

By having the movable reinforcement member arranged inside said hollow structural member, the latter may be selectively reinforced at different portions thereof, thus selectively counteracting the controlled deformation at the predefined fail points.

According to one example embodiment, at least a portion of an outer lateral surface of said reinforcement member is threaded or bellow-shaped. Thus, when the vehicle is subjected to a collision force, the reinforcement member partially deforms, such that the outer lateral surface thereof expands radially, thereby engaging the inner surface of the hollow structural member inside of which the reinforcement member is arranged. Thereby, the reinforcement member is secured to the hollow structural member when the vehicle is subjected to collision forces.

According to one example embodiment, said adjustable safety cell comprises at least one operable locking interface arranged to prevent translatory movement of at least a portion of said movable reinforcement member relative to said vehicle reinforcement frame. Thus, the direction of movement of the movable reinforcement member may be controlled more accurately, as one end thereof may be selectively secured to a portion of the vehicle reinforcement frame.

According to one example embodiment, said at least one operable locking interface is arranged to selectively prevent translatory movement of said movable reinforcement member relative to said vehicle reinforcement frame. In other words, the at least one operable locking interface is movable between a locked state, in which translatory movement of said movable reinforcement member relative to said vehicle reinforcement frame is prevented, and an unlocked state, in which translatory movement of said movable reinforcement member relative to said vehicle reinforcement frame is allowed.

Translatory movement, in the context of this embodiment of the present invention, is taken to mean movement along a direction that is parallel with the longitudinal extension of said movable reinforcement member, i.e. movement in a direction between said first position and said second position.

According to one example embodiment, said reinforcement member is provided as a pair of threaded rods arranged to mate with each other such that relative rotation thereof causes them to move relative to each other along an extension of at least a portion of said vehicle reinforcement frame.

For example, the pair of threaded rods may be provided as an externally threaded rod and an internally threaded hollow rod, the two having matching threads and being configured such that the internally threaded hollow rod may receive the externally threaded rod and engage in threaded connection therewith.

Thus, the position of the reinforcement member may be adjusted by rotating the two threaded rods relative to each other, thereby allowing precision control of the relative position of the movable reinforcement members and the vehicle reinforcement frame.

According to one example embodiment, at least one of said threaded rods comprises a motor connected to an end thereof, said motor being arranged to cause said threaded rod, to which it is connected, to rotate relative to the other threaded rod.

Having movement of the reinforcement member between the first position and the second position be controlled by a motor allows for non-destructive and reliable testing of the reinforcement member repositioning, as the safety cell may be adjusted between different configurations without any plastic deformation or permanent damage to any components thereof. Said motor may for example be an electric motor, coupled to an auxiliary battery, a vehicle battery or another power source.

According to one example embodiment, said motor comprises a rotational lock arranged to prevent rotation thereof relative to said vehicle reinforcement frame. The rotational lock may for example be provided as an abutment extending in a radial direction from said motor, which abutment engages a longitudinally extending track provided in the vehicle reinforcement frame, wherein the engagement thereof prevents rotation of the motor relative to said vehicle reinforcement frame.

According to one embodiment having two motors for each reinforcement member, one arranged at an end of either threaded rod, the reinforcement member further comprises an operable rotational lock in the motor that is configured to selectively prevent the threaded rod connected to each motor from rotating relative thereto. This allows both motors to be used alternatingly to move the two threaded rods relative to each other.

According to one example embodiment, the vehicle reinforcement frame comprises motor interfaces arranged such that in the first position, a first motor of said movable reinforcement member engages a first motor interface and is powered thereby, while in a second position, a second motor of said movable reinforcement member engages a second motor interface and is powered thereby. The motor interfaces may for example be provided as electrical connectors to which the motors are configured to connect.

According to one example embodiment, the vehicle reinforcement frame comprises motor interfaces arranged such that in the first position, a first motor of said movable reinforcement member engages a first motor interface and is powered thereby, while in a second position, an interface of said movable reinforcement member engages a second motor interface, thereby powering said first motor. In this embodiment, the first motor may be connected to said interface of said movable reinforcement member, thus allowing for the first motor to be powered either by being directly connected to said first motor interface, or by being connected to said second motor interface through said interface of said movable reinforcement member.

According to one example embodiment, said first and second motor interfaces are located at positions adjacent to said first and second position, respectively.

For example, the pair of threaded rods may be provided as an externally threaded rod and an internally threaded hollow rod, the two having matching threads and being configured such that the internally threaded hollow rod may receive the externally threaded rod and engage in threaded connection therewith.

According to one example embodiment, at least a portion of an outer lateral surface of each one of said threaded rods is threaded or bellow-shaped. For example, the externally threaded rod has an externally threaded outer lateral surface, and the internally threaded hollow rod may be provided with a threaded or bellow-shaped outer lateral surface.

According to one example embodiment, said reinforcement member is provided as a linear hydraulic motor comprising a cylinder and a piston that are movable along an extension of at least a portion of said vehicle reinforcement frame. Thus, the position of the reinforcement member may be adjusted by controlling the linear hydraulic motor, causing the cylinder and piston to move relative to each other, thereby allowing precision control of the relative position of the movable reinforcement members and the vehicle reinforcement frame. Alternatively, said reinforcement member may be provided as a linear pneumatic motor, having the same features as the linear hydraulic motor described above and in the following, mutatis mutandis.

Having movement of the reinforcement member between the first position and the second position be controlled by a linear hydraulic motor allows for non-destructive and reliable testing of the reinforcement member repositioning, as the safety cell may be adjusted between different configurations without any plastic deformation or permanent damage to any components thereof.

According to one example embodiment, said adjustable safety cell further comprises a first port and a second port, each of which is arranged to be connected to a source of hydraulic pressure. Thus, the linear hydraulic motor may be powered thereby.

According to one example embodiment, said adjustable safety cell further comprises a hydraulic pump configured to control the movement of said linear hydraulic motor.

According to one example embodiment, at least a portion of an outer lateral surface of each one of said piston and cylinder is threaded or bellow-shaped. For example, the piston may have an externally threaded or bellow-shaped outer casing attached thereto, the inner diameter of which is greater than the outer diameter of said cylinder. The outer casing may for example be cylinder-shaped, one end of which is attached to a portion of the piston and the other end of which is free to receive said cylinder in which said piston is arranged. Similarly, said cylinder may be provided with a threaded or bellow-shaped outer lateral surface.

According to a second aspect of the present invention, a vehicle having an adjustable safety cell according to the first aspect of the present invention is provided. Advantages and benefits of the first aspect of the present invention are equally applicable to the second aspect of the present invention.

Generally, all terms used in the description are to be interpreted according to their ordinary meaning in the technical field, unless explicitly defined otherwise herein. All references to "a/an/the [element, device, component, means, step, etc.]" are to be interpreted openly as referring to at least one instance of said element, device, component, means, step, etc., unless explicitly stated otherwise.

### BRIEF DESCRIPTION OF THE DRAWINGS

These and other features and advantages of the present invention will now be further clarified and described in more detail, with reference to the appended drawings showing different embodiments of an adjustable safety cell and a vehicle comprising the same according to the present invention.
Figure 1a is a schematic overview of a vehicle provided with an adjustable safety cell according to one embodiment of the present invention, illustrating a scenario in which a section of the vehicle interior corresponding to the driver's seat has been reinforced,
Figure 1b is a schematic overview of the vehicle of figure 1a, illustrating a scenario in which a rear section of the vehicle interior has been reinforced,
Figure 1c illustrates a vehicle provided with an adjustable safety cell according to one embodiment of the present invention, illustrating a scenario in which a front section of the vehicle interior has been reinforced,
Figure 2a is a schematic side view of an adjustable safety cell according to one embodiment of the present invention,
Figure 2b illustrates a fully reinforced adjustable safety cell according to the embodiment of figure 2a, corresponding to the detection of vehicle occupancy across the entire vehicle interior,
Figure 2c illustrates a partially reinforced adjustable safety cell according to the embodiment of figure 2a, corresponding to the detection of vehicle occupancy in the front section of the vehicle interior,
Figure 2d illustrates a partially reinforced adjustable safety cell according to the embodiment of figure 2a, corresponding to the detection of vehicle occupancy in the left section of the vehicle interior,
Figure 3 illustrates a vehicle comprising a vehicle occupancy detection module,
Figure 4a is a sectioned side view of a movable reinforcement member according to one embodiment of the present invention, wherein the movable reinforcement member is in a first position,
Figure 4b is a sectioned side view of the movable reinforcement member of figure 4a, wherein the movable reinforcement member is in a second position,
Figure 4c is a sectioned side view of the movable reinforcement member of figure 4a, wherein the movable reinforcement member is in a third position,
Figure 5a is a sectioned side view of a movable reinforcement member according to one embodiment of the present invention, wherein the movable reinforcement member is in a first position,
Figure 5b is a sectioned side view of the movable reinforcement member of figure 5a, wherein the movable reinforcement member is in a second position,
Figure 5c is a sectioned side view of the movable reinforcement member of figure 5a, wherein the movable reinforcement member is in a third position,
Figure 6a is a sectioned side view of a movable reinforcement member according to one embodiment of the present invention, wherein the movable reinforcement member is in a first position,
Figure 6b is a sectioned side view of the movable reinforcement member of figure 6a, wherein the movable reinforcement member is in a second position,
Figure 6c is a sectioned side view of the movable reinforcement member of figure 6a, wherein the movable reinforcement member is in a third position,
Figure 7a is a sectioned side view of a movable reinforcement member according to one embodiment of the present invention, wherein the movable reinforcement member is in a first position,
Figure 7b is a sectioned side view of the movable reinforcement member of figure 7a, wherein the movable reinforcement member is in a second position,
Figure 7c is a sectioned side view of the movable reinforcement member of figure 7a, wherein the movable reinforcement member is in a third position,
Figure 8a is a sectioned side view of a movable reinforcement member according to one embodiment of the present invention, wherein the movable reinforcement member is in a first position,
Figure 8b is a sectioned side view of the movable reinforcement member of figure 8a, wherein the movable reinforcement member is in a second position,
Figure 8c is a sectioned side view of the movable reinforcement member of figure 8a, wherein the movable reinforcement member is in a third position.

### DETAILED DESCRIPTION OF EMBODIMENTS

In the following detailed description, some embodiments of the present invention will be described. However, it is to be understood that features of the different embodiments are exchangeable between the embodiments and may be combined in different ways, unless anything else is specifically indicated. Even though in the following description, numerous specific details are set forth to provide a more thorough understanding of the present invention, it will be apparent to one skilled in the art that the present invention may be practiced without these specific details. In other instances, well known constructions or functions are not described in detail, so as not to obscure the present invention.

In the following, all relative positional indications such as upper, lower, lateral, rear-most, front-most, left, and right are to be interpreted from their normal meaning and from the perspective the vehicle in its intended direction of travel. For the figures illustrating the movable reinforcement members, the relative positional indications left and right are simply situational and are to be interpreted from the viewplane of the figure. Consequently, an oppositely arranged mirror image of the movable reinforcement member is equally valid in the context of the present inveition.

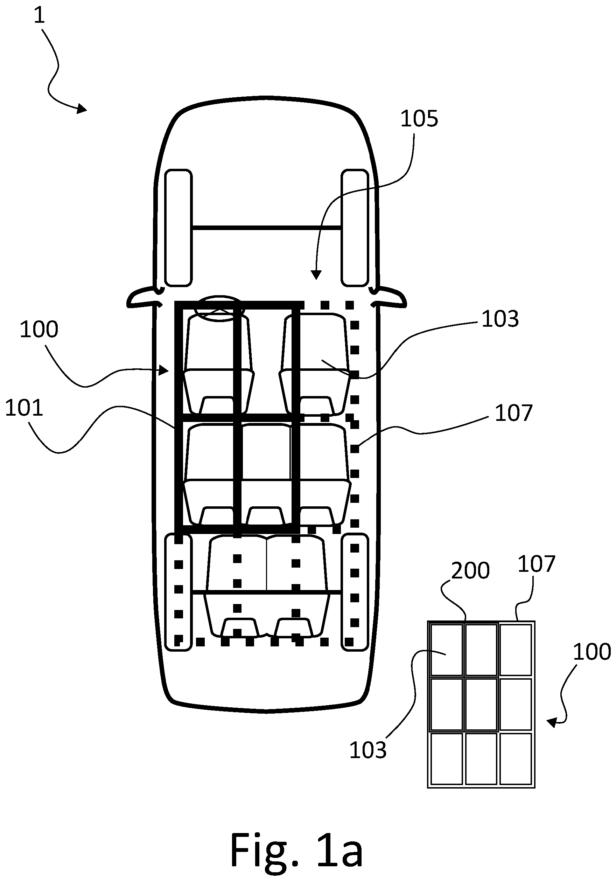

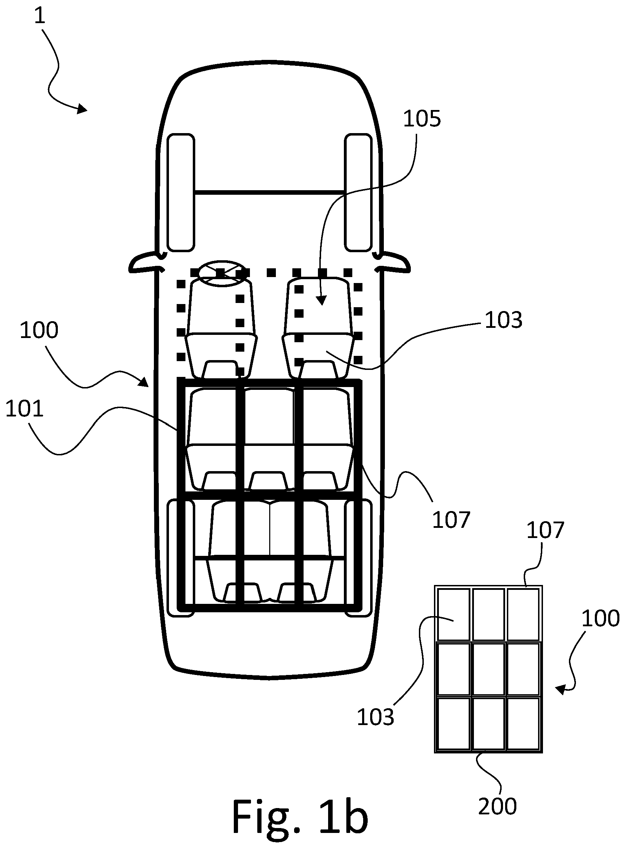

Figure 1a is a schematic overview of a vehicle 1 provided with an adjustable safety cell 100 according to one embodiment of the present invention. The adjustable safety cell 100 comprises a vehicle reinforcement frame 101 that defines a plurality of sections 103 of a vehicle interior 105. The adjustable safety cell 100 is configured such that it may selectively reinforce different sections 103 of the vehicle interior 105. Illustrated in figure 1a is a scenario in which a front-left section 103 and the three adjacent sections 103 of the vehicle interior 105 have been reinforced, as indicated by the solid lines, while the front-right and rear sections 103 of the vehicle interior 105 have been made part of the deformation zone of the vehicle 1, as indicated by the dashed line. By selectively reinforcing different portions of the vehicle reinforcement frame 101, the safety cell size and shape may be controlled in order to provide a good fit with the needs of the occupants. The needs of the occupants are determined primarily by means of detecting vehicle occupancy. The detected vehicle occupancy then controls the size of the adjustable safety cell 100 defined by the reinforced portions of the vehicle reinforcement frame 101. Alternatively, the safety cell adjustment may be controlled manually by a user through a user interface 901 of the vehicle 1 in which the adjustable safety cell 100 is arranged. Figure 1b illustrates a scenario in which a rear section 103 of the vehicle interior 105 has been reinforced. This corresponds to the detection of vehicle occupancy in the rear seats of the vehicle 1, thus allowing the front seat thereof to be made part of the deformation zone.

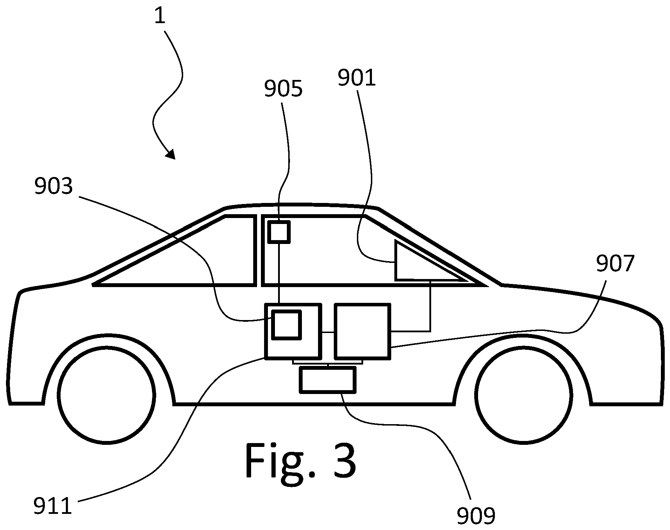

Figure 3, further highlighted below, illustrates a vehicle 1 comprising a vehicle occupancy detection module 903 configured to detect how many individuals are present in the vehicle 1, which seats are occupied by these individuals, and also to perform a seat-by-seat classification of detected occupancy in the vehicle, e.g. differentiating between passengers, pets, cargo, etc. The vehicle occupancy detection module 903 does this by means of a sensor 905, e.g. a camera or pressure sensor, that is configured to detect and classify occupancy for each seat or section of the vehicle 1.

The scenario illustrated in figure 1a corresponds to the vehicle occupancy detection module 903 detecting that the driver's seat and the seat right behind the driver's seat are occupied, while the remaining seats are unoccupied. Therefore, the rear seats and the right side of the vehicle are all made part of the deformation zone by adjusting the size of the adjustable safety cell 100. Similarly, the scenario illustrated in figure 1b corresponds to the vehicle occupancy detection module 903 detecting that the vehicle 1 only holds occupants in the two back rows, thereby prompting the adjustable safety cell 100 to selectively reinforce portions thereof such that the front row of seats in the vehicle 1 is made part of the deformation zone.

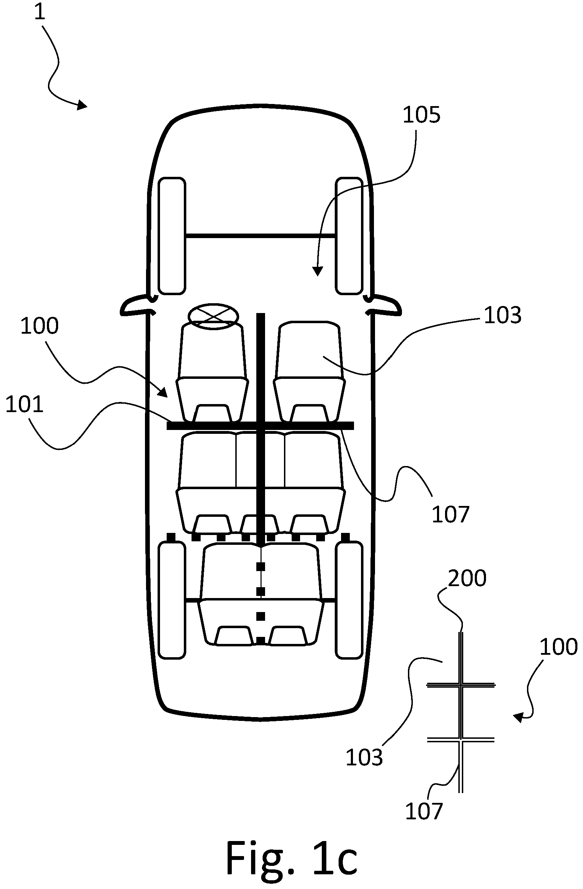

The vehicle reinforcement frame 101 of the adjustable safety cell 100 of the present invention comprises hollow structural members 107, inside of which movable reinforcement members 200 are arranged. The hollow structural members 107 being reinforced by the movable reinforcement members 200 is illustrated in the schematic overview thereof that is provided on the side of the illustration of the vehicle 1 in each one of figures 1a-c, while the movable reinforcement members 200 themselves will be illustrated in greater detail in the following figures. The adjustable safety cell 100 illustrated in figures 1a and 1b has hollow structural members 107 which form the shape of a three-by-three grid of interconnected frames, part of which is reinforced by the movable reinforcement members 200, as is emphasized in the respective figure. In other words, each frame of the grid of interconnected frames 109 may be reinforced by movement of the movable reinforcement members 200 to exclude a portion of the vehicle interior 105 from the deformation zone. Figure 1c illustrates an alternative embodiment of the present invention, in which the hollow structural members 107 of the adjustable safety cell 100 are provided in the shape of a two-barred cross, with a central segment defining a lengthwise adjustable portion of the vehicle reinforcement frame 101, and two segments that are perpendicular to the central segment that define a front-most and rear-most lateral extension of the adjustable safety cell 100, respectively. In the illustrated scenario, both lateral sides of a front-most section of the vehicle interior has been reinforced by the adjustable safety cell, causing the rear-most section of the vehicle interior to be part of the deformation zone. For the embodiments illustrated in figures 1a-c, the vehicle reinforcement frame 101 extends in a plane that is parallel with the length-width extension of the vehicle 1, i.e. a plane that is normally parallel with the ground plane.

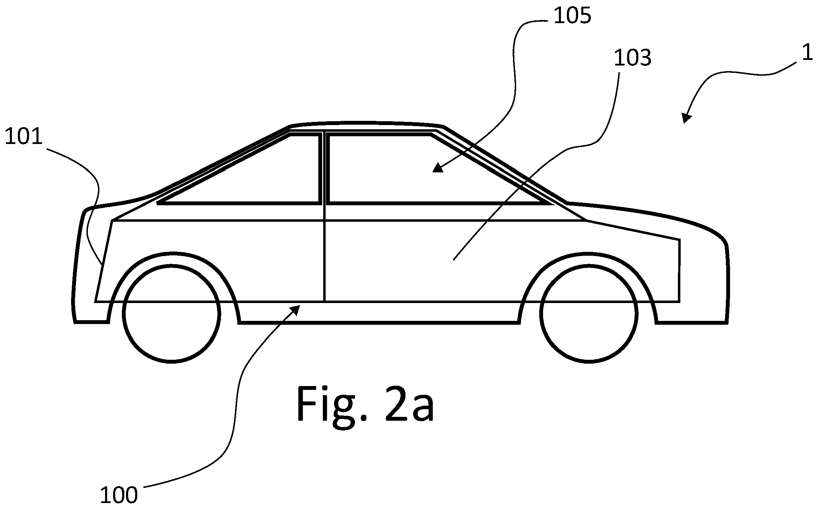

Figures 2a-d illustrate an embodiment of the invention in which the vehicle reinforcement frame 101 extends three-dimensionally. Figure 2a is a schematic side view of an adjustable safety cell 100 according to this embodiment of the present invention. This adjustable safety cell 100 forms a sectioned box-shape around a portion of the vehicle interior 105. In the illustrated embodiment, the hollow structural members 107 form a 2*2*2 sectioned box-shape. Like with the embodiment illustrated in figures 1a-c, selectively reinforcing different portions of the vehicle reinforcement frame 101 of the embodiment of Figures 2a-d allows the safety cell size and shape to be controlled in order to provide a good fit with the needs of the occupants.

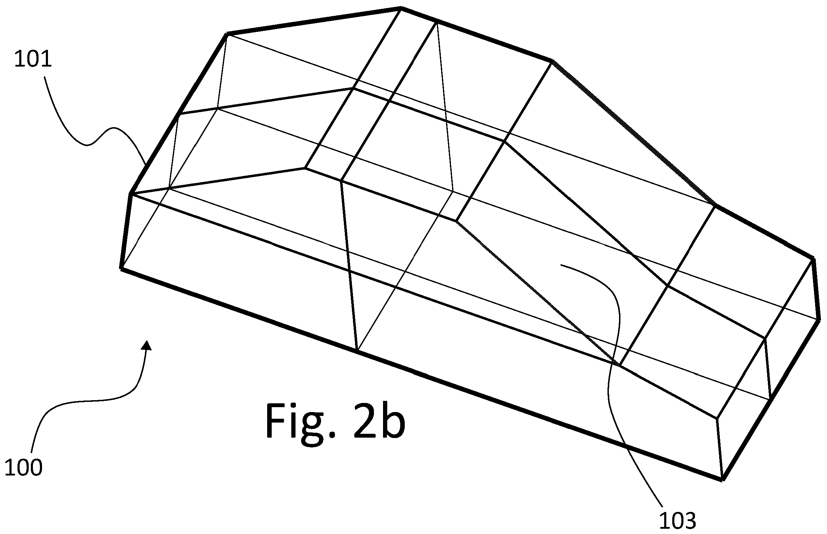

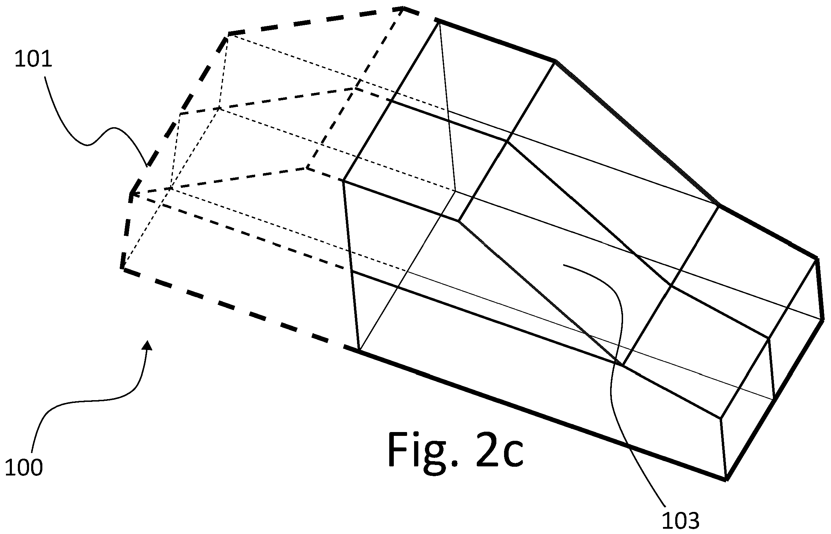

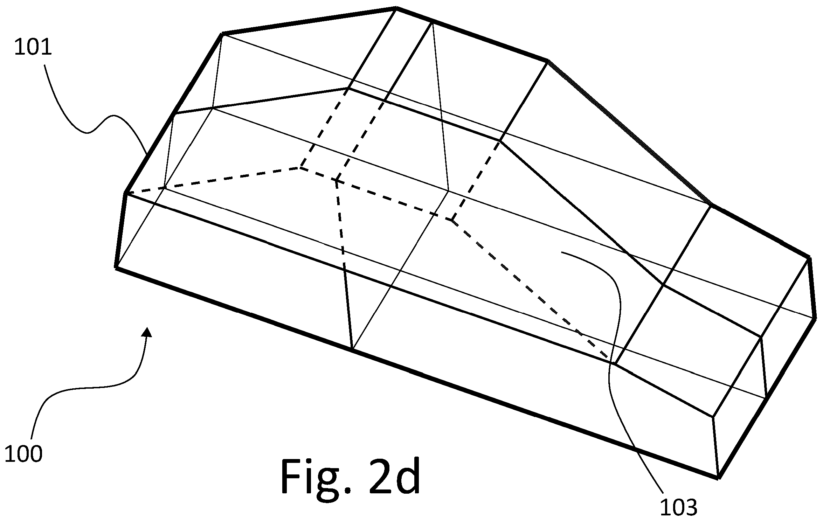

Figure 2b illustrates a fully reinforced adjustable safety cell 100 according to this embodiment of the present invention, corresponding to the detection of vehicle occupancy across the entire vehicle interior 105. Figure 2c illustrates a scenario in which vehicle occupancy has been detected in the front section of the vehicle interior 105, causing the adjustable safety cell 100 to reinforce only this portion thereof. The rear portion, consequently, has been made part of the deformation zone. Figure 2d illustrates a scenario in which vehicle occupancy has been detected in the left half of the vehicle interior 105, as seen from an intended direction of travel of the vehicle 1, causing the adjustable safety cell 100 to reinforce the entire left half of the vehicle 1, and the lower portion of the right half of the vehicle 1. The upper portion of the right half of the vehicle 1 has been made part of the deformation zone. The fact that the reinforced portion of the adjustable safety cell 100 extends three-dimensionally causes the vehicle 1 to be less likely to roll in case of an accident, as having a partially deformable upper portion of one section of the vehicle interior 105 increases the likeliness of the vehicle roll coming to a stop.

Figure 3, as mentioned, illustrates a vehicle 1 comprising a vehicle occupancy detection module 903. The vehicle further comprises a processing unit 907, a memory unit 909, a user interface 901, and a perception unit 911. The memory unit 909 is a computer-readable storage medium storing a program configured to be executed by the processing unit 907, wherein the program comprises instructions for controlling the adjustable safety cell 100 of the present invention. The user interface 901 is configured to allow a user to manually adjust the size of the safety cell by selectively reinforcing different sections 103 of the vehicle reinforcement frame 101, and the perception unit 911 comprises modules of the vehicle 1 associated with perception of the external world and the vehicle 1 itself.

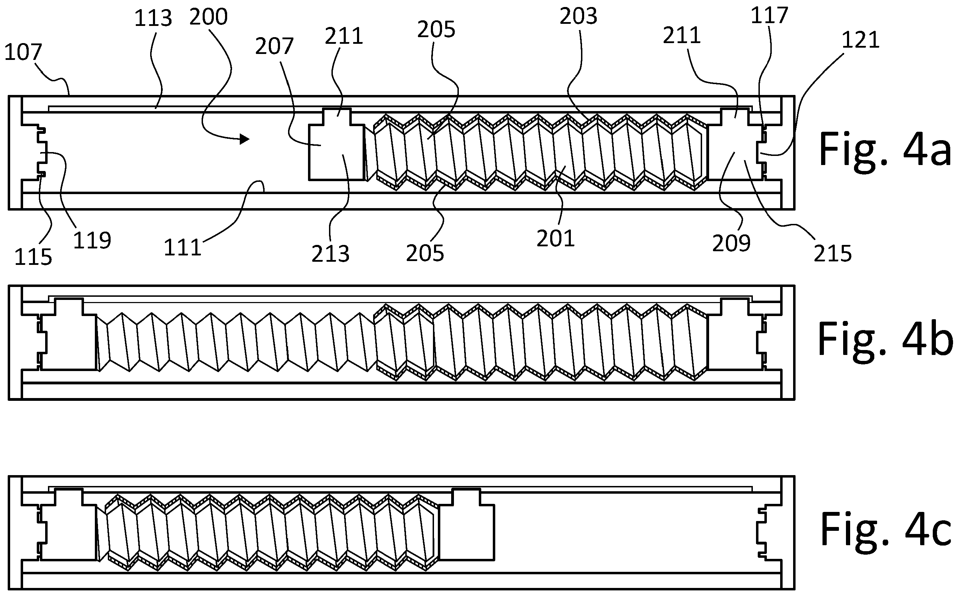

Figure 4a-c are sectioned side views of a movable reinforcement member 200 according to one embodiment of the present invention. The adjustable safety cell 100 of the present invention comprises movable reinforcement members 200, such as the one illustrated herein. The movable reinforcement members 200 are arranged such that movement thereof selectively reinforces different portions of the vehicle reinforcement frame 101, and consequently different sections of the vehicle interior 105. The movable reinforcement members 200 are configured to move between a first position, a second position and a third position, as is illustrated in figures 4a-c, respectively. Also, the vehicle reinforcement frame 101 comprises hollow structural members 107, inside of which the movable reinforcement members 200 are arranged.

Each one of the movable reinforcement members 200 of this embodiment is provided as a pair of threaded rods 201, 203 arranged to mate with each other. One is an externally threaded rod 201 and the other is an internally threaded hollow rod 203, the two having matching threads and being configured such that the internally threaded hollow rod 203 may receive the externally threaded rod 201 and engage in threaded connection therewith. Being engaged in threaded connection, relative rotation thereof causes the pair of threaded rods 201, 203 to move relative to each other. Thus, the position of the movable reinforcement member 200 may be adjusted by rotating the two threaded rods 201, 203 relative to each other, thereby allowing precision control of the relative position of the movable reinforcement members 200 and the vehicle reinforcement frame 101.

As such, a portion of the outer lateral surface 205 of each one of the pair of threaded rods 201, 203 of the movable reinforcement member 200 is threaded. Thus, when the vehicle 1 is subjected to a collision force, the pair of threaded rods 201, 203 of the movable reinforcement member 200 partially deforms, such that the outer lateral surface 205 thereof expands radially, thereby engaging an inner surface 111 of the hollow structural member 107 inside of which the movable reinforcement member 200 is arranged.

In the illustrated embodiment, both threaded rods 201, 203 are provided with a motor 207, 209 connected to an end thereof. The motor 207, 209 of each threaded rod 201, 203 is arranged to cause that threaded rod 201, 203 to rotate relative to the other threaded rod 201, 203, thus causing the threads thereof to engage and cause a translatory movement of the two threaded rods 201, 203.

Each motor 207, 209 comprises an abutment 211 extending in a radial direction from the motor 207, 209, the abutment 211 being arranged to function as a rotational lock in order to prevent rotation of the motor 207, 209 relative to the vehicle reinforcement frame 101. The abutment 211 engages a longitudinally extending track 113 provided in the vehicle reinforcement frame 101, such that rotation of the motor 207, 209 relative to the vehicle reinforcement frame 101 is prevented.

Furthermore, the motors 207, 209 each comprises an operable rotational lock 213, 215 integrated therein that is configured to selectively prevent the threaded rod 201, 203 connected thereto from rotating. This allows both motors 207, 209 to be used alternatingly to move the two threaded rods 201, 203 relative to each other. When the first motor 207 is activated and used to cause the externally threaded rod 201 to rotate, the operable rotational lock 215 of the second motor 209 is activated such that the internally threaded hollow rod 203 is prevented from rotating. Conversely, when the second motor 209 is activated and used to cause the internally threaded hollow rod 203 to rotate, the operable rotational lock 213 of the first motor 207 is activated such that the externally threaded rod 201 is prevented from rotating.

The two motors 201, 203 of the illustrated embodiment are electric motors, powered by a power source not illustrated herein.

At either end of the hollow structural member 107 of the vehicle reinforcement frame 101, motor interfaces 115, 117 are arranged. These motor interfaces 115, 117 are arranged to provide an electrical interface between a power source and the motors 207, 209. When the movable reinforcement member 200 is in the first position, which is described below, the first motor 207 engages the first motor interface 115. When the movable reinforcement member 200 is in the second positon, also described below, the first motor 207 and the second motor 209 engages the first motor interface 115 and the second motor interface 117, respectively. When the movable reinforcement member is in the third positon, the second motor 209 engages the second motor interface 117.

Additionally, the adjustable safety cell 100 comprises operable locking interfaces 119, 121 arranged to selectively prevent translatory movement of the pair of threaded rods 201, 203 relative to the vehicle reinforcement frame 101. Thus, the direction of movement of the movable reinforcement member 200 may be controlled more accurately, as one end thereof may be selectively secured to a portion of the vehicle reinforcement frame 101 by means of the operable locking interfaces 119, 121. The operable locking interfaces 119, 121 are movable between a locked state, in which translatory movement of corresponding threaded rod 201, 203 of the movable reinforcement member 200 relative to the vehicle reinforcement frame 101 is prevented, and an unlocked state, in which translatory movement of the corresponding threaded rod 201, 203 of the movable reinforcement member 200 relative to the vehicle reinforcement frame 101 is allowed.

The first position of the movable reinforcement member 200, illustrated in figure 4a, is such that the internally threaded hollow rod 203 is positioned in its rightmost position, while the threads of the externally threaded rod 201 have fully engaged the threads of the internally threaded hollow rod 203, such that this rod 201 also is in its rightmost position. The second motor 209 is engaged with both the second motor interface 117 and the operable locking interface 121, thereby powering the motor 209 and preventing translatory movement of the internally threaded hollow rod 203 from the rightmost position. In this arrangement, the right half of the hollow structural member 107 of this portion of the vehicle reinforcement frame 101 has been reinforced.

The second position of the movable reinforcement member 200, illustrated in figure 4b, is such that the threads of the two threaded rods 201, 203 have been partially disengaged to the extent that the externally threaded rod 201 has been moved to its leftmost position, while the internally threaded hollow rod 203 remains in its rightmost position. The first motor 207 is engaged with both the first motor interface 115 and the operable locking interface 119, and the second motor 209 is engaged with the second motor interface 117 and the operable locking interface 121. Thus, the movable reinforcement member 200 is held in place at both ends, thereby causing the entire length of the hollow structural member 107 of this portion of the vehicle reinforcement frame 101 to be reinforced.

The third position of the movable reinforcement member 200, illustrated in figure 4c, is such that is such that the externally threaded rod 201 is positioned in its leftmost position, while the threads of the internally threaded hollow rod 203 have fully engaged the threads of the externally threaded rod 201, such that this rod 203 also is in its leftmost position. The first motor 207 is engaged with both the first motor interface 115 and the operable locking interface 119, thereby powering the motor 207 and preventing translatory movement of the externally threaded rod 201 from the leftmost position. In this arrangement, the left half of the hollow structural member 107 of this portion of the vehicle reinforcement frame 101 has been reinforced.

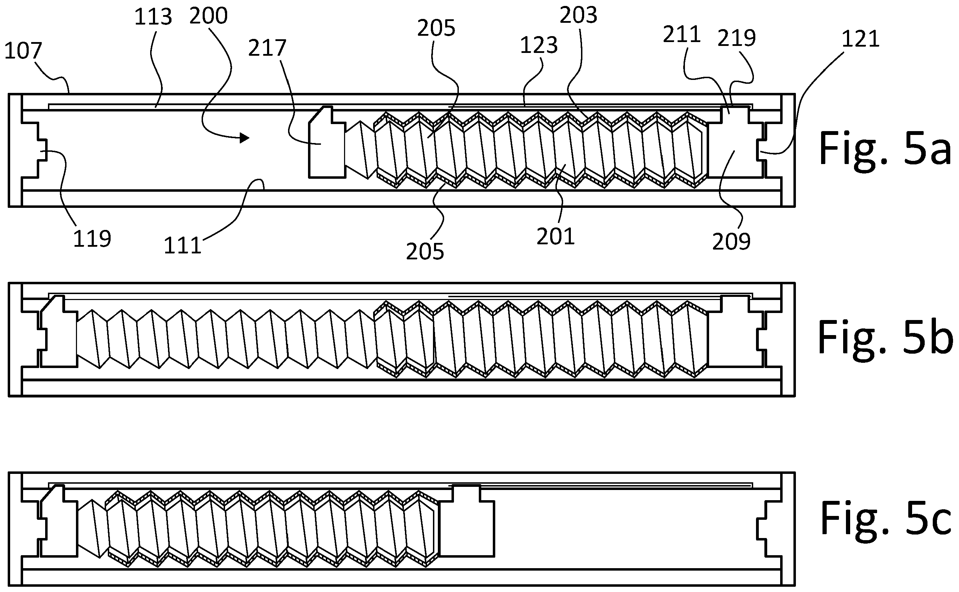

Figures 5a-c are sectioned side views of a movable reinforcement member 200 according to another embodiment of the present invention. Like the embodiment illustrated in figures 4a-c, the movable reinforcement member 200 is provided as a pair of threaded rods 201, 203. Unless otherwise specified, the two embodiments share features and components, as described above.

In the illustrated embodiment, the movable reinforcement member 200 comprises a single motor 209 connected to an end of the internally threaded hollow rod 203. The motor 209 is arranged to cause the internally threaded hollow rod 203 to rotate relative to the externally threaded rod 201, thus causing the threads thereof to engage and cause a translatory movement of the two threaded rods 201, 203.

The motor 209 comprises an abutment 211 extending in a radial direction therefrom, the abutment 211 being arranged to function as a rotational lock in order to prevent rotation of the motor 209 relative to the vehicle reinforcement frame 101. The abutment 211 engages a longitudinally extending track 113 provided in the vehicle reinforcement frame 101, such that rotation of the motor 209 relative to the vehicle reinforcement frame 101 is prevented.

Furthermore, the externally threaded rod 201 comprises a fixed abutment 217 arranged at one end thereof, arranged to function as a rotational lock. The abutment 217 of the externally threaded rod 201 engages a longitudinally extending track 113 provided in the vehicle reinforcement frame 101, such that rotation of the externally threaded rod 201 relative to the vehicle reinforcement frame 101 is prevented.

In the abutment 211 extending from the motor 209, a motor interface 219 is arranged. This motor interface 219 is arranged to provide a sliding electrical interface between a power source and the motor 209 via an electrical connection 123 provided along a portion of the longitudinally extending track 113 of the vehicle reinforcement frame 101. This may for example be a spring based electrical connector. Thus, electrical connection between a power source and the motor 209 may be maintained while the movable reinforcement member 200 moves between positions.

The motor 209 of this embodiment is configured to selectively run in either direction, depending on the needs of the situation. In the embodiment of figures 4a-c, the motors 207, 209 only need to run in one direction each.

Like the embodiment of figures 4a-c, this embodiment moves the movable reinforcement member 200 between a first position, a second position, and a third position. In a first position, illustrated in figure 5a, the internally threaded hollow rod 203 is in its rightmost position, connected to the operable locking interface 121 such that translatory movement therefrom is prevented. The externally threaded rod 201 is fully engaged with the internally threaded hollow rod 203, such that this rod 201 also is in its rightmost position. By using the motor to cause the internally threaded hollow rod 203 to rotate in a first direction, the externally threaded rod 201 is forced to move towards the other end of the hollow structural member 107 of this portion of the vehicle reinforcement frame 101 by engagement of the threads of the pair of threaded rods 201, 203. Thus, the movable reinforcement member 200 is in its second position, as is illustrated in figure 5b. Once in the leftmost position, the externally threaded rod 201 is locked in place by means of the operable locking interface 119, thus preventing it from moving towards the first position. Then, the operable locking interface 121 holding the internally threaded hollow rod 203 in place is released, and the motor is used to cause the internally threaded hollow rod 203 to rotate in a second direction, such that the internally threaded hollow rod 203 is forced to move leftwards, towards the other end of the hollow structural member 107 of this portion of the vehicle reinforcement frame 101 by engagement of the threads of the pair of threaded rods 201, 203. Thus, the movable reinforcement member 200 is in its third position, as is illustrated in figure 5c.

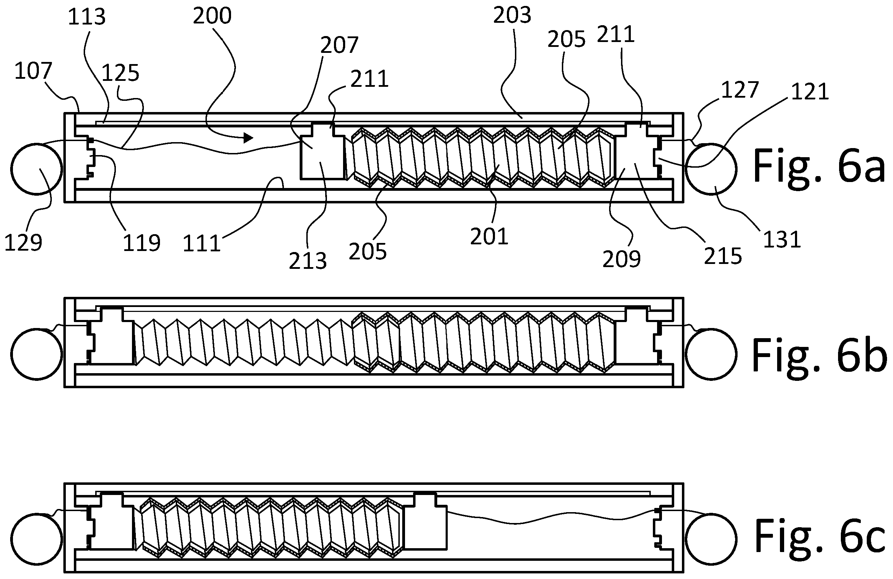

Figures 6a-c are sectioned side views of a movable reinforcement member 200 according to another embodiment of the present invention. Unless otherwise specified, the embodiment illustrated herein share features and components with the two abovementioned embodiments. Like the embodiment illustrated in figures 4a-c, the movable reinforcement member 200 is provided as a pair of threaded rods 201, 203. Here, motor interfaces are provided in the form of flexible electrical connectors 125, 127 arranged to retract and protrude as the two threaded rods 201, 203 move between their left-most and right-most positions. The flexible electrical connectors 125, 127 of this embodiment are provided on a respective spool 129, 131, which feeds and retracts the flexible electrical connectors 125, 127 as needed when the pair of threaded rods 201, 203 moves. The movable reinforcement member 200 of this embodiment moves between a first, second and third position in the same way as the movable reinforcement member 200 of figures 4a-c. This movement between the three positions is illustrated in figures 6a-c, respectively.

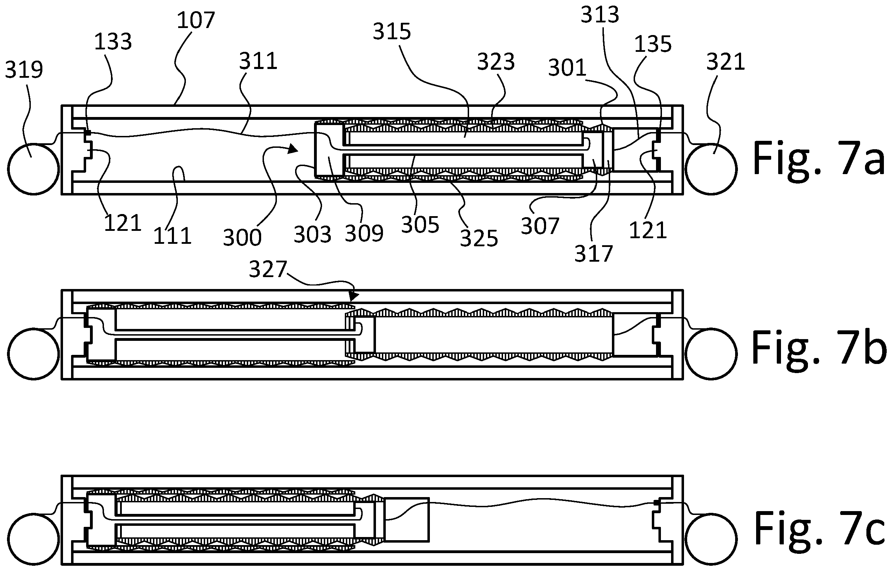

Figure 7a-c are sectioned side views of a movable reinforcement member 200 according to another embodiment of the present invention. Unless otherwise specified, the embodiment illustrated herein share features and components with the three abovementioned embodiments, mutatis mutandis. The movable reinforcement member 200 of this embodiment is provided as a linear hydraulic motor 300 comprising a cylinder 301 and a piston 303 that are movable along an extension of a portion of the hollow structural member 107 of the vehicle reinforcement frame 101. The piston 303 comprises a piston rod 305, a head 307 provided at one end thereof, and a rear connection member 309 provided at an opposite end thereof. The position of the linear hydraulic motor 300 relative to the hollow structural member 107 of the vehicle reinforcement frame 101 is adjustable by controlling a hydraulic feed thereto, causing the cylinder 301 and piston 303 to move relative to each other.

In the first position, illustrated in figure 7a, the cylinder 301 and the piston 303 are arranged in their right-most position, with the cylinder 301 being connected to the hollow structural member 107 by means of an operable locking interface 121 provided at one end thereof, which is arranged to selectively prevent translatory movement of the cylinder 301 relative to the vehicle reinforcement frame 101. Thus, the direction of movement of the linear hydraulic motor 300 may be controlled more accurately, as one end of the cylinder 301 may be selectively secured to a portion of the vehicle reinforcement frame 101 by means of the operable locking interfaces 121. The operable locking interface 121 is movable between a locked state, in which translatory movement of the cylinder 301 relative to the vehicle reinforcement frame 101 is prevented, and an unlocked state, in which translatory movement of the cylinder 301 relative to the vehicle reinforcement frame 101 is allowed.

In the second position, illustrated in figure 7b, the cylinder 301 is arranged in its right-most position and the piston 303 in its left-most position. The cylinder 301 is connected to the hollow structural member 107 by means of the operable locking interface 121 as described above, and the rear connection member 309 of the piston 303 is connected to the hollow structural member 107 by means of another operable locking interface 121 arranged at an end thereof. In the third position, illustrated in figure 7c, the cylinder 301 and the piston 303 are arranged in their left-most position, with the rear connection member 309 of the piston 303 being connected to the hollow structural member 107 by means of the operable locking interface 121.

In this embodiment, the adjustable safety cell 100 comprises a first port 133 and a second port 135, each of which is connected to a source of hydraulic pressure (not illustrated herein), by means of which the linear hydraulic motor 300 is powered. The first and second port 133, 135 are provided at either end of the hollow structural member 107, and connects to the linear hydraulic motor 300 by means of two flexible hydraulic connection lines 311, 313. The first flexible hydraulic connection line 311 connects a first port 133, provided in the left end of the hollow structural member 107, with a first cylinder space 315 defined by the head 307 of the piston 303 and the left-most end of the cylinder 301. The first flexible hydraulic connection line 311 extends from the first port 133, to the rear connection member 309, through the piston rod 305, and connects to the first cylinder space 315. The second flexible hydraulic connection line 313 connects a second port 135, provided in the right end of the hollow structural member 107, with a second cylinder space 317 defined by the head 307 of the piston 303 and the right-most end of the cylinder 301. The second flexible hydraulic connection line 313 extends from the second port 135, to the cylinder 301, and connects to the second cylinder space 317. Thus, by providing hydraulic pressure to the linear hydraulic motor 300 though the first and second flexible hydraulic connection lines 311, 313, the linear hydraulic motor 300 may be actuated and moved between its positions, as illustrated above. Each one of the two flexible hydraulic connection lines 311, 313 are provided on a respective spool 319, 321, which feeds and retracts the flexible hydraulic connection lines 311, 313 as needed when the cylinder 301 and piston 303 of the linear hydraulic motor 300 move.

In the illustrated embodiment, the outer lateral surface 323 of the cylinder 301 is bellow-shaped, and the piston 303 has a bellow-shaped outer casing 325 attached to the rear connection member 309 thereof. The inner diameter of the outer casing 325 is greater than the outer diameter of the cylinder 301, thus allowing the cylinder 301 to be received thereby when both the piston 303 and the cylinder 301 are in their right-most or left-most position. The outer casing 325 extends from the rear connection member 309 to a position adjacent to the head 307 of the piston 303, such that when the piston 303 is in its left-most position and the cylinder 301 in its right-most position, the outer casing 325 of the piston 303 and the outer lateral surface 323 of the cylinder 301 jointly define a bellow-shaped outer surface 327 extending along substantially the entire length of the hollow structural member 107, thereby reinforcing it. Thus, when the vehicle is subjected to a collision force, the bellow-shaped outer surface 327 of the linear hydraulic motor 300 partially deforms and expands radially, thereby engaging an inner surface 111 of the hollow structural member 107 inside of which the linear hydraulic motor 300 is arranged.

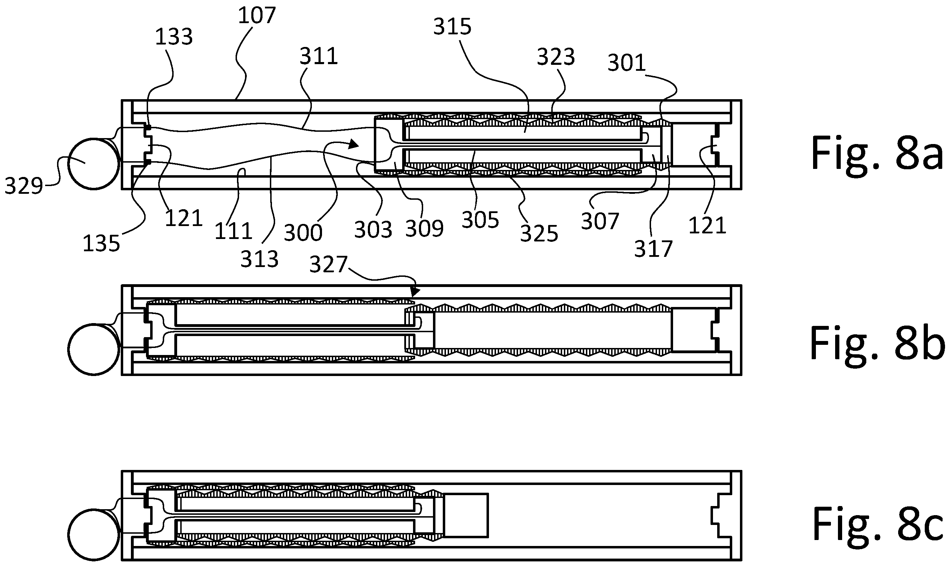

Figures 8a-c illustrate an alternative embodiment of the linear hydraulic motor 300 of the present invention, in which the first port and the second port are both provided at the leftmost end of the hollow structural member 107, and in which both of the two flexible hydraulic connection lines 311, 313 connects to the linear hydraulic motor 300 through the piston rod 305. The first flexible hydraulic connection line 311 extends from the first port 133, to the rear connection member 309, through the piston rod 305, and connects to the first cylinder space 315 defined by the head 307 of the piston 303 and the left-most end of the cylinder 301. The second flexible hydraulic connection line 313 extends from the second port 135, to the rear connection member 309, through the piston rod 305, and connects to the second cylinder space 317 defined by the head 307 of the piston 303 and the right-most end of the cylinder 301. By providing hydraulic pressure to the linear hydraulic motor 300 though the first and second flexible hydraulic connection lines 311, 313, the linear hydraulic motor 300 may be actuated and moved between its positions, as illustrated above. Each one of the two flexible hydraulic connection lines 311, 313 are provided on a single spool 329, which feeds and retracts the flexible hydraulic connection lines 311, 313 as needed when the cylinder 301 and piston 303 of the linear hydraulic motor 300 move.

The person skilled in the art realizes that the present invention by no means is limited to the embodiments described above. The features of the described embodiments may be combined in different ways, and many modifications and variations are possible within the scope of the appended claims. In the claims, any reference signs placed between parentheses shall not be construed as limiting to the claim. The word "comprising" does not exclude the presence of other elements or steps than those listed in the claim. The word "a" or "an" preceding an element does not exclude the presence of a plurality of such elements.

## Claims

1. A vehicle (1) having an adjustable safety cell (100) for adjusting the size of a deformation zone of the vehicle (1), the adjustable safety cell (100) comprising:
a vehicle reinforcement frame (101),
a movable reinforcement member (200) arranged to reinforce at least a portion of said vehicle reinforcement frame (101),
wherein said reinforcement member (200) is arranged to move between a first position and a second position,
wherein in said first position, a first portion of said vehicle reinforcement frame (101) is reinforced, and wherein in said second position, a second portion of said vehicle reinforcement frame (101) is reinforced,
**characterised in that** the vehicle (1) further comprises a vehicle occupancy detection module (903) configured to detect vehicle occupancy, wherein said adjustable safety cell (100) is arranged to move said reinforcement members (200) based on detected vehicle occupancy.

2. The vehicle (1) according to claim 1, wherein said vehicle reinforcement frame (101) defines a plurality of sections (103) of a vehicle interior (105) and wherein movement of said reinforcement members (200) between a first position and a second position is such that different sections (103) of said vehicle interior (105) are reinforced.

3. The vehicle (1) according to any one of the preceding claims, wherein said vehicle reinforcement frame (101) is made from at least one hollow structural member (107), at least partially inside of which said movable reinforcement member (200) is arranged.

4. The vehicle (1) according to any one of the preceding claims, wherein at least a portion of an outer lateral surface of said reinforcement member (200) is threaded or bellow-shaped.

5. The vehicle (1) according to any one of the preceding claims, wherein said adjustable safety cell (100) comprises at least one operable locking interface (121) arranged to prevent translatory movement of at least a portion of said movable reinforcement member (200) relative to said vehicle reinforcement frame (101).

6. The vehicle (1) according to any one of the preceding claims, wherein said reinforcement member (200) is provided as a pair of threaded rods (201, 203) arranged to mate with each other such that relative rotation thereof causes them to move relative to each other along an extension of at least a portion of said vehicle reinforcement frame (101).

7. The vehicle (1) according to claim 6, wherein at least one of said threaded rods (201, 203) comprises a motor (207, 209) connected to an end thereof, said motor (207, 209) being arranged to cause said threaded rod, to which it is connected, to rotate relative to the other threaded rod.

8. The vehicle (1) according to claim 7, wherein said motor (207, 209) comprises a rotational lock (213, 215) arranged to prevent rotation thereof relative to said vehicle reinforcement frame (101).

9. The vehicle (1) according to any one of claims 1 - 5, wherein said reinforcement member (200) is provided as a linear hydraulic motor (300) comprising a cylinder (301) and a piston (303) that are movable along an extension of at least a portion of said vehicle reinforcement frame (101).

10. The vehicle (1) according to claim 9, further comprising a first port (133) and a second port (135), each of which is arranged to be connected to a source of hydraulic pressure.

11. The vehicle (1) according to any one of claims 9 - 10, further comprising a hydraulic pump configured to control the movement of said linear hydraulic motor (300).

## Patentansprüche

1. Fahrzeug (1) mit einer einstellbaren Sicherheitszelle (100) zum Einstellen der Größe einer Deformationszone des Fahrzeugs (1), wobei die einstellbare Sicherheitszelle (100) umfasst:
einen Fahrzeugverstärkungsrahmen (101),
ein bewegliches Verstärkungselement (200), das so ausgelegt ist, dass es zumindest einen Teil des Fahrzeugverstärkungsrahmens (101) verstärkt,
wobei das Verstärkungselement (200) so ausgelegt ist, dass es sich zwischen einer ersten Position und einer zweiten Position bewegt, wobei in der ersten Position ein erster Teil des Fahrzeugverstärkungsrahmens (101) verstärkt ist und wobei in der zweiten Position ein zweiter Teil des Fahrzeugverstärkungsrahmens (101) verstärkt ist,
**dadurch gekennzeichnet, dass** das Fahrzeug (1) ferner ein Fahrzeugbelegungs-Erkennungsmodul (903) umfasst, das dazu eingerichtet ist, die Fahrzeugbelegung zu erkennen, wobei die einstellbare Sicherheitszelle (100) so ausgelegt ist, dass sie die Verstärkungselemente (200) basierend auf der erkannten Fahrzeugbelegung bewegt.

2. Fahrzeug (1) nach Anspruch 1, wobei der Fahrzeugverstärkungsrahmen (101) eine Mehrzahl von Abschnitten (103) eines Fahrzeuginnenraums (105) definiert und wobei eine Bewegung der Verstärkungselemente (200) zwischen einer ersten Position und einer zweiten Position derart ist, dass unterschiedliche Abschnitte (103) des Fahrzeuginnenraums (105) verstärkt werden.

3. Fahrzeug (1) nach einem der vorhergehenden Ansprüche, wobei der Fahrzeugverstärkungsrahmen (101) aus mindestens einem hohlen Strukturelement (107) besteht, wobei das bewegliche Verstärkungselement (200) zumindest teilweise innerhalb dieses angeordnet ist.

4. Fahrzeug (1) nach einem der vorhergehenden Ansprüche, wobei zumindest ein Teil einer äußeren lateralen Oberfläche des Verstärkungselements (200) mit einem Gewinde versehen oder balgförmig ausgebildet ist.

5. Fahrzeug (1) nach einem der vorhergehenden Ansprüche, wobei die einstellbare Sicherheitszelle (100) mindestens eine betätigbare Verriegelungsschnittstelle (121) umfasst, die dazu angeordnet ist, eine translatorische Bewegung zumindest eines Teils des beweglichen Verstärkungselements (200) relativ zu dem Fahrzeugverstärkungsrahmen (101) zu verhindern.

6. Fahrzeug (1) nach einem der vorhergehenden Ansprüche, wobei das Verstärkungselement (200) als ein Paar von Gewindestangen (201, 203) bereitgestellt ist, die so ausgelegt sind, dass sie ineinandergreifen, sodass eine relative Drehung derselben bewirkt, dass sie sich relativ zueinander entlang einer Erstreckung zumindest eines Teils des Fahrzeugverstärkungsrahmens (101) bewegen.

7. Fahrzeug (1) nach Anspruch 6, wobei mindestens eine der Gewindestangen (201, 203) einen Motor (207, 209) umfasst, der mit einem Ende dieser verbunden ist, wobei der Motor (207, 209) so ausgelegt ist, dass er die Gewindestange, mit der er verbunden ist, relativ zu der anderen Gewindestange dreht.

8. Fahrzeug (1) nach Anspruch 7, wobei der Motor (207, 209) eine Drehverriegelung (213, 215) umfasst, die dazu ausgelegt ist, eine Drehung dieser relativ zu dem Fahrzeugverstärkungsrahmen (101) zu verhindern.

9. Fahrzeug (1) nach einem der Ansprüche 1 bis 5, wobei das Verstärkungselement (200) als ein linearer Hydraulikmotor (300) bereitgestellt ist, der einen Zylinder (301) und einen Kolben (303) umfasst, die entlang einer Erstreckung zumindest eines Teils des Fahrzeugverstärkungsrahmens (101) beweglich sind.

10. Fahrzeug (1) nach Anspruch 9, ferner umfassend einen ersten Anschluss (133) und einen zweiten Anschluss (135), wobei jeder davon dazu ausgelegt ist, mit einer Quelle für hydraulischen Druck verbunden zu werden.

11. Fahrzeug (1) nach einem der Ansprüche 9 bis 10, ferner umfassend eine Hydraulikpumpe, die dazu eingerichtet ist, die Bewegung des linearen Hydraulikmotors (300) zu steuern.

## Revendications

1. Véhicule (1) comportant une cellule de sécurité réglable (100) pour régler la taille d'une zone de déformation du véhicule (1), la cellule de sécurité réglable (100) comprenant :
un cadre de renforcement de véhicule (101),
un élément de renforcement mobile (200) agencé pour renforcer au moins une partie dudit cadre de renforcement de véhicule (101),
dans lequel ledit élément de renforcement (200) est agencé pour se déplacer entre une première position et une seconde position,
dans lequel, dans ladite première position, une première partie dudit cadre de renforcement de véhicule (101) est renforcée, et
dans lequel, dans ladite seconde position, une seconde partie dudit cadre de renforcement de véhicule (101) est renforcée,
**caractérisé en ce que** le véhicule (1) comprend en outre un module de détection d'occupation de véhicule (903) configuré pour détecter l'occupation du véhicule, dans lequel ladite cellule de sécurité réglable (100) est agencée pour déplacer lesdits éléments de renforcement (200) sur la base de l'occupation du véhicule détectée.

2. Véhicule (1) selon la revendication 1, dans lequel ledit cadre de renforcement de véhicule (101) définit une pluralité de sections (103) d'un habitacle de véhicule (105) et dans lequel le mouvement desdits éléments de renforcement (200) entre une première position et une seconde position est tel que différentes sections (103) dudit habitacle de véhicule (105) sont renforcées.

3. Véhicule (1) selon l'une quelconque des revendications précédentes, dans lequel ledit cadre de renforcement de véhicule (101) est constitué d'au moins un élément structurel creux (107), à l'intérieur duquel ledit élément de renforcement mobile (200) est au moins partiellement agencé.

4. Véhicule (1) selon l'une quelconque des revendications précédentes, dans lequel au moins une partie d'une surface latérale externe dudit élément de renforcement (200) est filetée ou en forme de soufflet.

5. Véhicule (1) selon l'une quelconque des revendications précédentes, dans lequel ladite cellule de sécurité réglable (100) comprend au moins une interface de verrouillage actionnable (121) agencée pour empêcher un mouvement de translation d'au moins une partie dudit élément de renforcement mobile (200) par rapport audit cadre de renforcement de véhicule (101).

6. Véhicule (1) selon l'une quelconque des revendications précédentes, dans lequel ledit élément de renforcement (200) se présente sous la forme d'une paire de tiges filetées (201, 203) agencées pour s'accoupler l'une avec l'autre de telle sorte qu'une rotation relative de celles-ci provoque leur déplacement l'une par rapport à l'autre le long d'un prolongement d'au moins une partie dudit cadre de renforcement de véhicule (101).

7. Véhicule (1) selon la revendication 6, dans lequel au moins l'une desdites tiges filetées (201, 203) comprend un moteur (207, 209) relié à une extrémité de celle-ci, ledit moteur (207, 209) étant agencé pour amener ladite tige filetée, à laquelle il est relié, à tourner par rapport à l'autre tige filetée.

8. Véhicule (1) selon la revendication 7, dans lequel ledit moteur (207, 209) comprend un verrou de rotation (213, 215) agencé pour empêcher une rotation de celui-ci par rapport audit cadre de renforcement de véhicule (101).

9. Véhicule (1) selon l'une quelconque des revendications 1 à 5, dans lequel ledit élément de renforcement (200) se présente sous la forme d'un moteur hydraulique linéaire (300) comprenant un cylindre (301) et un piston (303) qui sont mobiles le long d'un prolongement d'au moins une partie dudit cadre de renforcement de véhicule (101).

10. Véhicule (1) selon la revendication 9, comprenant en outre un premier orifice (133) et un second orifice (135), chacun d'eux étant agencé pour être relié à une source de pression hydraulique.

11. Véhicule (1) selon l'une quelconque des revendications 9 à 10, comprenant en outre une pompe hydraulique configurée pour commander le mouvement dudit moteur hydraulique linéaire (300).
